Europäisches Patentamt

European Patent Office

Office européen des brevets

(11) Veröffentlichungsnummer: **0 033 868**
**B1**

(12) **EUROPÄISCHE PATENTSCHRIFT**

(45) Veröffentlichungstag der Patentschrift:
22.06.83

(21) Anmeldenummer: **81100408.4**

(22) Anmeldetag: **21.01.81**

(51) Int. Cl.³: **F 16 B 5/02**

(30) Priorität: **29.01.80 DE 3003027**

(43) Veröffentlichungstag der Anmeldung:
**19.08.81 Patentblatt 81/33**

(45) Bekanntmachung des Hinweises auf die Patenterteilung: **22.06.83 Patentblatt 83/25**

(84) Benannte Vertragsstaaten:
**AT BE DE NL SE**

(56) Entgegenhaltungen:
**DD A 126 211**
**DE A 1 910 252**
**DE A 2 754 371**
**DE U 7 047 196**
**DE U 7 618 059**
**FR A 2 084 423**
**FR B 2 239 143**

(73) Patentinhaber: **Vereinigte Glaswerke GmbH**
**Viktoria Allee 3-5**
**D-5100 Aachen (DE)**

(72) Erfinder: **Elsenheimer, Kurt**
**Loorweg 179a**
**D-5000 Köln 90 (DE)**
Erfinder: **Braine, Jean**
**In der Adelenhütte 2**
**D-5000 Köln 90 (DE)**

(74) Vertreter: **Biermann, Wilhelm, Dr.-Ing.**
**Vereinigte Glaswerke GmbH Viktoriaallee 3-5**
**D-5100 Aachen (DE)**

Jouve, 18, rue St-Denis, 75001 Paris, France

Kraftübertragende Befestigung eines Metallteiles an einer Glasplatte und ihre Anwendung

Die Erfindung betrifft eine kraftübertragende Befestigung eines Metallteiles an einer Glasplatte, bei der das Metallteil mit einer Befestigungsplatte versehen ist, die mit einer auf der anderen Seite der Glasplatte angeordneten Gegenplatte unter Zwischenschaltung elastischer Zwischenlagen verschraubt ist.

Wenn Glasplatten Teile einer größeren Konstruktion sind, werden sie entweder in den Rand der Glasplatte übergreifenden Befestigungsschienen eingespannt, oder mit Hilfe von Bohrungen in der Glasplatte durchdringenden Schrauben mit den anderen Gegenständen der Konstruktion verschraubt. Dabei ist es üblich, daß das mit der Glasplatte zu verschraubende Teil eine Befestigungsplatte aufweist, die mit einer Gegenplatte verschraubt wird, so daß die Glasplatte zwischen diesen beiden Metallplatten unter Zwischenschaltung elastischer Zwischenlagen eingespannt wird. Die elastischen Zwischenlagen sollen den unmittelbaren Kontakt der Metallplatten mit der Glasoberfläche verhindern, und so Kraftspitzen und Verletzungen der Glasoberfläche vermeiden.

Diese elastischen Zwischenlagen entsprechen in ihrer Größe üblicherweise der Größe der anliegenden Befestigungsplatte bzw. der Gegenplatte, wobei auch die in den Zwischenlagen für den Durchtritt der Befestigungsschrauben vorgesehenen Durchbrechungen der Größe der Bohrungen in der Glasplatte und in den Metallplatten entsprechen.

Es gibt Fälle, in denen an der Verbindungsstelle zwischen der Glasplatte und dem daran befestigten Metallteil erhebliche Biegekräfte von dem Metallteil auf die Glasplatte übertragen werden. Selbst wenn die Glasplatten aus vorgespanntem Glas bestehen, das bekanntlich verglichen mit nicht vorgespanntem Glas eine hohe Biegefestigkeit aufweist, kann es in solchen Fällen zu einem Bruch der Glasplatte kommen.

Der Erfindung liegt die Aufgabe zugrunde, die eingangs genannte Befestigungsmethode so abzuwandeln, daß die Belastbarkeit der Verbindung wesentlich gesteigert wird.

Diese Aufgabe wird erfindungsgemäß dadurch gelöst, daß bei wenigstens einer der elastischen Zwischenlagen die Durchbrechungen für den Durchtritt der Befestigungsschrauben so groß sind, daß der Kontakt der Zwischenlage mit der Glasoberfläche in einem Abstand von der Kante der Bohrung beginnt, der wenigstens gleich dem Radius der Bohrung ist.

Durch die erfindungsgemäßen Maßnahmen wird erreicht, daß die Fläche auf der Glasplatte, auf der die Kraft angreift, die in die Glasplatte Biegespannungen induziert, aus dem unmittelbaren Bereich der Bohrungen weg in die Glasfläche verlegt wird. Infolgedessen werden die Maxima der Biegezugspannungen ebenfalls in die Glasfläche hinein verlagert, so daß die Wände der Bohrungen weit weniger den Biegespannungen ausgesetzt sind als bei der bekannten Montageart. Da bekanntlich die Biegebruchfestigkeit von Glas im Bereich einer Kante erheblich niedriger ist als in der Fläche, und da die Wände der Bohrungen insoweit vergleichbar sind mit den Seitenkanten einer Glasscheibe, tritt hier die Wirkung der Entlastung der unmittelbaren Umgebung der Bohrungen in vollem Umfang ein. Es hat sich zum Beispiel gezeigt, daß es möglich ist, durch die erfindungsgemäße Befestigung die Belastbarkeit einer Verbindung auf mehr als das Zehnfache zu steigern, ohne daß die Glasplatte zu Bruch geht.

Vorteilhafterweise werden die Durchbrechungen für den Durchtritt der Befestigungsschrauben in der Zwischenlage so groß gewählt, daß der Kontakt der Zwischenlage mit der Glasoberfläche in einem Abstand von der Bohrungswandung beginnt, der gleich oder größer als der Durchmesser der Bohrung ist.

Die Erfindung läßt sich mit Erfolg auch dann anwenden, wenn die Befestigungsplatte mit nur einer einzigen Schraube mit der Gegenplatte verschraubt ist. Wenn die Befestigung der Befestigungsplatte mittels zwei oder mehr Schrauben erfolgt, wird zweckmäßigerweise die elastische Zwischenlage in Streifenform oder als Ring ausgebildet, der sämtliche Bohrungen umschließt. In Weiterbildung der Erfindung werden innerhalb der Bohrungen in der Glasscheibe Buchsen aus elastischem Material angeordnet, die einen Kontakt zwischen den Schrauben und den Bohrungswandungen verhindern.

Eine besonders hohe Belastbarkeit der Verbindung läßt sich erzielen, wenn die Glasplatte aus vorgespanntem Glas besteht.

Ein bevorzugtes Anwendungsbeispiel für die Erfindung ist die Befestigung eines Basketballringes an einem Spielbrett aus vorgespanntem Glas. Dieses Anwendungsbeispiel wird im folgenden an Hand der Zeichnungen im einzelnen beschrieben. Von den Zeichnungen zeigt

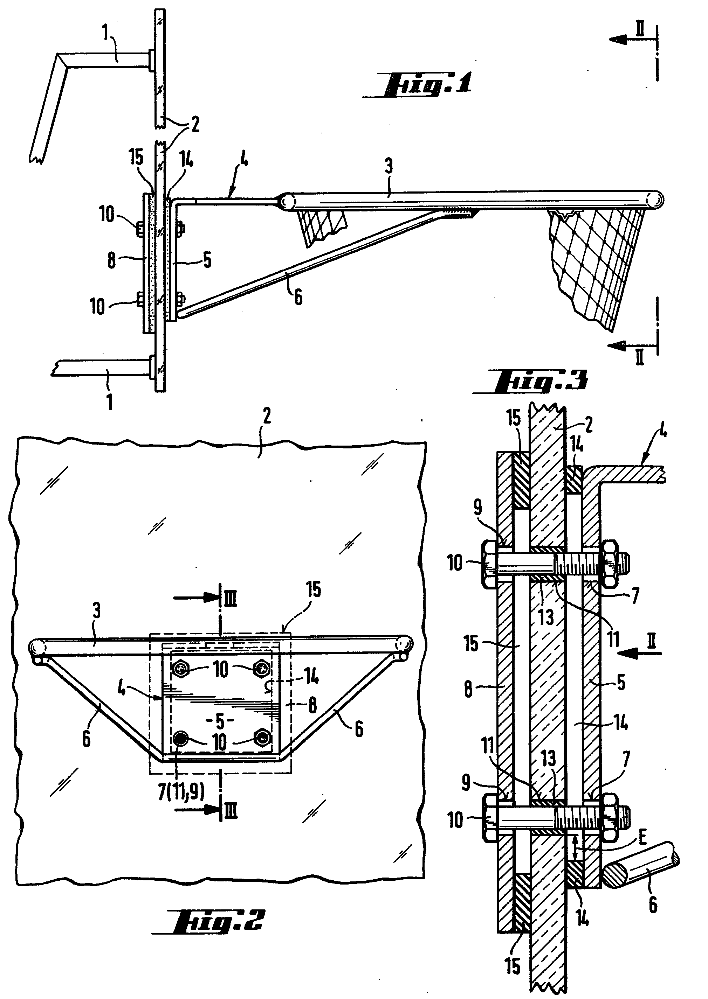

Figur 1 ein Basketballgerät in einer Seitenansicht,

Figur 2 den Ring des Gerätes und seine Befestigung in der Vorderansicht,

Figur 3 die erfindungsgemäße Befestigung des Ringes auf dem Spielbrett in einer vergrößerten Darstellung.

Ein erfindungsgemäßes Basketballgerät besteht aus dem Gerüst 1, der an dem Gerüst 1 befestigten als Spielbrett dienenden Glasplatte 2 und dem an der Glasplatte 2 befestigten kreisförmigen Ring 3. Die Glasplatte 2 hat eine Breite von 180 cm und eine Höhe von 120 cm und besteht aus vorgespanntem Silikatglas von 12 mm Dicke. Der Ring 3 ist an einer Konsole 4 befestigt, deren nach unten abgewinkelter Bereich die Befestigungsplatte 5 bildet. Ferner ist der Ring 3 durch die Stützen 6 aus Rundstahl abgestützt. Die Befestigungsplatte 5 ist mit vier Bohrungen 7 versehen. Auf der Rückseite des Spielbrettes 2 ist eine Gegenplatte 8 angeordnet, in der ebenfalls vier Bohrungen 9 angebracht sind, und zwar deckungsgleich mit den Bohrungen 7 in der Befestigungsplatte. Mit Hilfe von vier Schrauben 10 wird die Gegenplatte 8 mit der Befestigungsplatte 5 verschraubt. Die Bohrungen 11 in der Glasplatte 2, die die Schrauben 10 durchdringen, haben einen Durchmesser von 12 mm. In die Bohrungen 11 werden Buchsen 13 aus einem elastischen Material, beispielsweise aus Kunststoff, eingesetzt.

Wie insbesondere aus Fig. 3 hervorgeht, ist zwischen der Befestigungsplatte 5 und der Glasplatte 2 als Zwischenlage ein 6 mm dicker und 10 mm breiter Gummistreifen 14 entlang dem Rand der Befestigungsplatte 5 angeordnet. Die kürzeste Entfernung E der Innenkante dieses Gummistreifens 14 von der den Gummistreifen 14 zugewandten Kante der Bohrung 11 beträgt etwa 10 mm. Die Kraftübertragung von der Befestigungsplatte 5 auf die Glasplatte 2 erfolgt also ausschließlich über diesen abstandshaltenden Gummistreifen 14 in einem Bereich außerhalb des zwischen den vier Bohrungen 11 liegenden Feldes.

In gleicher Weise ist auf der anderen Seite der Glasplatte 2 zwischen dieser und der Gegenplatte 8 ebenfalls entlang dem Rand der Gegenplatte ein Gummistreifen 15 von 6 mm Dicke angeordnet, der die gleiche Funktion hat wie der Gummistreifen 14. Der Gummistreifen 15 hat bei diesem Ausführungsbeispiel, bei dem die Gegenplatte 8 größere Abmessungen hat als die Befestigungsplatte 5, eine Breite von 20 mm.

Zur Prüfung der durch die Erfindung erreichten Erhöhung der Belastbarkeit wird ein nach der herkömmlichen Art auf einer vorgespannten Glasscheibe von 12 mm Dicke befestigter Korbring mit einem Korbring verglichen, der in der beschriebenen erfindungsgemäßen Weise auf einer ebenfalls 12 mm dicken Glasplatte befestigt ist. Bei der herkömmlichen Befestigung werden als Zwischenlagen auf beiden Seiten der Glasplatte 6 mm dicke Gummiplatten verwendet, die jeweils die Größe der Befestigungsplatte bzw. der Gegenplatte aufweisen, und in denen mit den Bohrungen in der Glasplatte deckungsgleiche Löcher angebracht sind. Zur Prüfung der Korbbefestigung wird der Pendelschlagtest nach DIN 52 337 angewandt unter Benutzung einer 45 kg schweren Stahlbirne. Der an der Glasplatte montierte Korbring wird in eine senkrechte Lage gebracht, so daß die Glasplatte sich in einer horizontalen Ebene befindet. Sodann wird die an dem Pendel befestigte Stahlbirne ausgelenkt und schlägt nach dem Loslassen gegen den vorderen Rand des Korbringes, d. h. in einer Entfernung von etwa 61 cm von der Glasplatte.

Während unter diesen Versuchsbedingungen bei herkömmlicher Befestigung des Korbringes das Glas bei einer Fallhöhe der Stahlbirne von 15 cm, entsprechend einer Stoßenergie von 65 Nm zu Bruch geht, kann bei einem erfindungsgemäßen befestigten Korbring die Fallhöhe auf den mehrfachen Wert gesteigert werden, ohne daß die Glasplatte bricht. Eine Steigerung der Fallhöhe auf mehr als 40 cm,

entsprechend einer Stoßenergie von 230 Nm, ist nicht sinnvoll, weil sich dann der Korb unter der Wirkung des Stoßes zu stark deformiert. Selbst bei Stoßenergien von 840 Nm, die der maximalen Fallhöhe der Stahlbirne entsprechen, geht die Glasplatte nicht zu Bruch.

Ähnliche Verbesserungen ergeben sich bei anderen Anwendungsfällen, und die Erfindung ist überall da einzusetzen, wo die Glasplatte starken Biegebeanspruchungen im Bereich solcher Klemmbefestigungen ausgesetzt ist.

**Ansprüche**

1. Biegekräfte übertragende Klemmverbindung zwischen einer Platte (2) aus vorgespanntem Glas und zwei Metallplatten (5, 8), die mit Hilfe von Bohrungen (11) in der Glaspatte (2) durchdringenden Schraubenbolzen (10) unter Zwischenschaltung elastischer Zwischenlagen (14, 15) zwischen der Glasplatte (2) einerseits und den Metallplatten (5, 8) andererseits die Glasplatte (2) zwischen sich einspannen, wobei die Zwischenlagen (14, 15) mit Durchbrechungen für den Durchtritt der Schraubenbolzen (10) versehen sind, dadurch gekennzeichnet, daß die Durchbrechungen in den Zwischenlagen (14, 15) für den Durchtritt der Schraubenbolzen (10) um ein solches Maß größer sind als die Bohrungen (11) in der Glasplatte (2), daß die kürzeste Entfernung (E) der Innenkante der Zwischenlagen (14, 15) von der nächstliegenden Kante der Bohrungen (11) wenigstens gleich dem Radius der Bohrungen (11) ist.

2. Klemmverbindung nach Anspruch 1, dadurch gekennzeichnet, daß die Durchbrechungen in den Zwischenlagen (14, 15) für den Durchtritt der Schraubenbolzen (10) um ein solches Maß größer sind als die Bohrungen (11) in der Glasplatte (2), daß die kürzeste Entfernung (E) der Innenkante der Zwischenlagen (14, 15) von der nächstliegenden Kante der Bohrungen (11) größer ist als der Durchmesser der Bohrungen (11).

3. Klemmverbindung nach Anspruch 1 oder 2, dadurch gekennzeichnet, daß bei einer Befestigung mittels zwei oder mehr Befestigungsschrauben (10) die elastischen Zwischenlagen ringförmig ausgebildet sind, und ihre Außenabmessungen den Außenabmessungen der Befestigungsplatte (5) bzw. der Gegenplatte (8) entsprechen.

4. Klemmverbindung nach Anspruch 1 bis 3, dadurch gekennzeichnet, daß innerhalb der Bohrungen (11) in der Glasplatte (2) Buchsen (13) aus elastischem Material angeordnet sind, die den Kontakt zwischen den Schrauben und dem Glas verhindern.

5. Anwendung der Klemmverbindung nach einem oder mehreren der Ansprüche 1 bis 4 für die Befestigung von Basketballkörben an Spielbrettern aus Silikatglas.

6. Anwendung der Klemmverbindung nach einem oder mehreren der Ansprüche 1 bis 4 für die Befestigung von Beschlägen an Ganzglasfenstern und Ganzglastüren.

## Claims

1. A clamping connection for transmitting bending forces between a plate (2) of pre-stressed glass and two metal plates (5, 8) clamping the glass plate (2) between them, the plates being clamped onto the glass by way of bolts (10) running through holes (11) in the glass plate, there being elastic washer layers (14, 15) between the glass plate (2) on the one hand and the metal plates (5, 8) on the other hand, such washer layers (14, 15) having openings to take up the bolts (10), characterized in that the openings in the washer layers (14, 15) for the bolts (10) have such a degree of oversize in relation to the holes (11) in the glass plate (2) that the shortest distance (E) between the inner edge of the washer layers (14, 15) and the nearest edge of the holes (11) is at least equal to the radius of the holes (11).

2. A clamping connection as claimed in claim 1, characterized in that the openings in the washer layers (14, 15) for the bolts (10) have such a degree of oversize in relation to the holes (11) in the glass plate (2) that the shortest distance (E) between the inner edge of the washer layers (14, 15) and the nearest edge of the holes (11) is greater than the diameter of the holes (11).

3. A clamping connection as claimed in claim 1 or claim 2, characterized in that in the case of a join using two or more fixing bolts (10) the elastic washer layers are in the form of rings and their outer size is the same as the outer size of the fixing plate (5) and of the counter plate (8) as the case may be.

4. A clamping connection as claimed in any one of claims 1 to 3, characterized in that within the holes (11) in the glass plate (2) there are bushes (13) made of elastic material for keeping the bolts clear of the glass.

5. The use of the clamping connection as claimed in any one or more of claims 1 to 4 for fixing basket ball baskets on games boards of silicate glass.

6. The use of the clamping connection as claimed in any one or more claims 1 to 4 for fixing fittings on all-glass windows and all-glass doors.

## Revendications

1. Dispositif de fixation par serrage à transmission de forces entre une dalle (2) en verre trempé et deux plaques métalliques (5, 8) qui, au moyen de vis traversant des trous (11) dans la dalle de verre (2), serrent entre elles la dalle de verre (2) avec intercalation de couches intermédiaires élastiques (14, 15) entre la dalle de verre (2) d'une part et les plaques métalliques (5, 8) d'autre part, étant entendu que les couches intermédiaires (14, 15) présentent des lacunes livrant passage aux vis (10), caractérisé en ce que les lacunes dans les couches intermédiaires (14, 15) livrant passage aux vis (10) ont des dimensions supérieures à celles de trous (11) de la dalle de verre (2) dans une mesure telle que la plus courte distance (E) entre le bord intérieur des couches intermédiaires (14, 15) et le bord le plus proche des trous (11) soit au moins égale au rayon des trous (11).

2. Dispositif de fixation par serrage suivant la revendication 1, caractérisé en ce que les lacunes des couches intermédiaires (14, 15) livrant passage aux vis (10) ont des dimensions supérieures à celles des trous (11) de la dalle de verre dans une mesure telle que la plus courte distance (E) entre le bord intérieur des couches intermédiaires (14, 15) et le bord le plus proche des trous (11) soit supérieure au diamètre des trous (11).

3. Dispositif de fixation par serrage suivant la revendication 1 ou 2, caractérisé en ce que dans le cas d'une fixation au moyen de deux ou de plus de deux vis de fixation (10), les couches intermédiaires élastiques sont de forme annulaire et leurs dimensions extérieures correspondent aux dimensions extérieures de la plaque de fixation (5) ou de la contre-plaque (8).

4. Dispositif de fixation par serrage suivant les revendications 1 à 3, caractérisé en ce que des douilles (13) en matière élastique sont disposées dans les trous (11) de la dalle de verre (2) et évitent tout contact entre les vis et le verre.

5. Application du dispositif de fixation par serrage suivant l'une quelconque des revendications 1 à 4, à la fixation de paniers de baskett-ball à des panneaux de jeu en verre silicaté.

6. Application du dispositif de fixation par serrage suivant l'une quelconque des revendications 1 à 4, à la fixation de ferrures à des fenêtres entièrement en verre et à des portes également entièrement en verre.

Fig. 1

Fig. 3

Fig. 2